# EUROPÄISCHE PATENTSCHRIFT

(11) **EP 2 873 554 B1**
(45) Veröffentlichungstag und Bekanntmachung des Hinweises auf die Patenterteilung: **20.04.2016**
(21) Anmeldenummer: 14191644.5
(22) Anmeldetag: 04.11.2014
(51) Int. Cl.: B60N 2/60

(54) **Schonbezug für einen Fahrzeugsitz**
Protective cover for a vehicle seat
Housse pour siège de véhicule

(30) Priorität: 13.11.2013 DE 102013112485
(43) Veröffentlichungstag der Anmeldung: 20.05.2015
(73) Patentinhaber: protact GmbH, 49439 Steinfeld (DE)
(72) Erfinder: Penzenstadler, Markus, 71263 Weil der Stadt (DE); Zerhusen, Werner, 49393 Lohne (DE)
(74) Vertreter: Albrecht, Rainer Harald

(56) Entgegenhaltungen:
- EP-A2- 0 983 895
- EP-B1- 1 055 554
- US-A1- 2002 043 834

## Beschreibung

Die Erfindung betrifft einen Schonbezug für einen Fahrzeugsitz bestehend aus einer umfangseitig geschlossenen zweilagigen Folienhülle, die an ihrer Rückseite eine Öffnung enthält, um die Folienhülle über einen Fahrzeugsitz stülpen zu können.

Der Schonbezug wird über einen Fahrzeugsitz gestülpt bzw. gezogen, um beispielsweise bei der werkseitigen Montage eines Fahrzeuges oder bei Reparatur- und Inspektionsarbeiten eine Verschmutzung des Fahrzeugsitzes zu verhindern. Sofern der Schonbezug bei der Erstausstattung eines Fahrzeuges verwendet wird, wird der Schonbezug oft bereits beim Sitzhersteller, spätestens aber beim Fahrzeughersteller, über den Fahrzeugsitz gezogen und erst vor der Auslieferung eines Fahrzeuges an den Kunden wieder entfernt. Die Folienhülle ist erheblichen Beanspruchungen ausgesetzt und wird daher oft aus einer relativ dicken und wenig dehnbaren Kunststofffolie gefertigt. Während die Vorderseite der aus zwei Lagen bestehenden Folienhülle durchgehend geschlossen ausgebildet ist, ist in der Rückseite eine Öffnung notwendig, damit der Schonbezug über die Rückenlehne und das Sitzpolster des Fahrzeugsitzes gestülpt und gezogen werden kann.

Ein Schonbezug mit den eingangs beschriebenen Merkmalen ist aus EP 1 055 554 B1 bekannt. Die Rückseite des bekannten Schonbezuges besteht ganz oder teilweise aus einer elastischen, rückstellfähigen Kunststofffolie mit einer elastischen Dehnung von mindestens 50 %. Durch die Elastizität der rückseitigen Kunststofffolie legt sich der Schonbezug besser an die Kontur des Fahrzeugsitzes an. Die Öffnung an der Rückseite der Folienhülle ist als randgeschlossene Ausnehmung ausgebildet und wird aus der elastischen Kunststofffolie ausgestanzt. Beim Ausstanzen der Folie fallen großformatige Abfallstücke an, die aufwendig entfernt werden müssen. Bei elastischen Folien handelt es sich um hochwertige Folien, so dass der Anfall großer Abfallmengen auch unter Kostengesichtspunkten unbefriedigend ist.

Vor diesem Hintergrund liegt der Erfindung die Aufgabe zugrunde, einen Schonbezug für einen Fahrzeugsitz anzugeben, der sich im Bereich seiner Öffnung an die Kontur eines Fahrzeugsitzes ausreichend anpasst und kostengünstig unter Vermeidung großformatiger elastischer Folienabfallstücke gefertigt werden kann.

Gegenstand der Erfindung und Lösung dieser Aufgabe ist ein Schonbezug nach Anspruch 1.

Die Erfindung geht aus von einem Schonbezug mit den eingangs beschriebenen Merkmalen. Erfindungsgemäß weist die Rückseite der Folienhülle mindestens drei Folienbahnen auf, die am Umfang der Folienhülle durch eine Siegelnaht mit einer die Vorderseite der Folienhülle bildenden Kunststofffolie verbunden sind. Zwei dieser drei Folienbahnen sind ohne Verbindung miteinander nebeneinander angeordnet und bestehen aus Elastomerfolien. Eine dritte Folienbahn an der Folienrückseite besteht aus einer nichtelastischen Folie und ist mit der benachbarten Elastomerfolie randseitig verbunden. Die Elastomerfolien stellen sich nach einer Dehnung und nachfolgender Entlastung zumindest teilweise zurück. Die elastische Dehnung kann mittels eines Zugversuches an einem Prüfstreifen ermittelt werden. Nach einer kurzzeitig einwirkenden Dehnung um 100 % und nachfolgender Relaxation sollte der Prüfstreifen eine plastische Restdehnung von weniger als 50 %, bezogen auf die Dehnung im Zugversuch, aufweisen. Die nichtelastische Folie an der Rückseite der Folienhülle weist demgegenüber keine oder allenfalls eine wesentlich geringere Elastizität auf. Die plastische Restdehnung einer solchen Folie ist nach Anwendung des zuvor beschriebenen Zugversuches größer als 50% und kann Werte zwischen 80 % und 100% erreichen.

Die nebeneinander angeordneten Elastomerfolien an der Rückseite der Folienhülle können sich an ihren Rändern berühren oder auch überlappen. Eine von der Erfindung umfasste Ausgestaltung sieht vor, dass die nicht verbundenen Ränder der nebeneinander angeordneten Elastomerfolien als gerade Ränder ausgebildet sind, die sich parallel zueinander erstrecken und mit einem Abstand nebeneinander angeordnet sind. Dieser Abstand kann zwischen einigen Millimetern und mehreren Zentimetern betragen. Der Abstand zwischen den Elastomerfolien und die Breite der aus einer Elastomerfolie bestehenden Folienbahnen richten sich nach der Form des Fahrzeugsitzes und werden so festgelegt, dass die Folienhülle problemlos über den Fahrzeugsitz gestülpt und gezogen werden kann und sich durch die Elastizität der aus Elastomerfolien bestehenden Folienbahnen mit einer guten Passform an den Fahrzeugsitz anlegt. Die erfindungsgemäße Folienhülle kann aus separaten Folienbahnen weitgehend ohne Materialverluste gefertigt werden. Lediglich für die Außenkontur ist ein Zuschnitt notwendig.

Gemäß einer weiteren von der Erfindung umfassten vorteilhaften Ausgestaltung weist zumindest einer der miteinander nicht verbundenen Ränder der Elastomerfolien eine derartige Kontur auf, dass die Elastomerfolien sich in endseitigen Abschnitten am Umfang der Folienhülle überlappen und in einem mittleren Bereich zwischen den endseitigen Abschnitten mit einem Abstand nebeneinander angeordnet sind. Die Kontur des betreffenden Randes der Elastomerfolie und kann insbesondere einen bogenförmigen Verlauf aufweisen. Vorzugsweise sind die sich überlappenden endseitigen Abschnitte der nebeneinander angeordneten Elastomerfolien am Umfang der Folienhülle durch eine Siegelnaht mit der die Vorderseite der Folienhülle bildenden Kunststofffolie verbunden. Durch die partielle Überlappung und Einbindung der sich überlappenden Endabschnitte der Elastomerfolien in eine umfangsseitige Siegelnaht erhält der Schonbezug eine lokale Verstärkung. Diese lokale Verstärkung trägt dazu bei, dass der Schonbezug nicht einreißt, wenn er über einen Fahrzeugsitz gezogen wird. Durch die vorzugsweise bogenförmige Kontur an zumindest einem der beiden nicht verbundenen Ränder der Elastomerfolien wird eine Öffnung geschaffen, die das Aufziehen des Schonbezuges auf einen Fahrzeugsitz vereinfacht und zu einer Verbesserung der Passform des Schonbezuges an dem Fahrzeugsitz beiträgt. Auch bei dieser Ausführung der Erfindung kann die erfindungsgemäße Folienhülle aus separaten Folienbahnen mit einem geringen Materialverlust gefertigt werden.

Die Vorderseite der Folienhülle und der von der nichtelastischen Folienbahn gebildete rückseitige Abschnitt der Folienhülle können aus einer strapazierfähigen Kunststofffolie gefertigt werden, die keine oder keine wesentliche Elastizität aufweist. Gemäß einer bevorzugten Ausführung der Erfindung bestehen die Kunststofffolie an der Vorderseite der Folienhülle und die nichtelastische Folienbahn an der Rückseite der Folienhülle aus einer ein- oder mehrschichtigen Folie, die zumindest an der Innenseite der Folienhülle eine siegelfähige Schicht aus einem Polyolefin oder Polyolefin-Copolymer aufweist. Die Frontseite und die Rückseite der Folienhülle sind am Umfang der Folienhülle mit einer Siegelnaht verbunden.

Die Elastomerfolien können aus einem Copolymer aus Ethylen-Vinylacetat oder Butylen-Vinylacetat bestehen. Da die elastischen Folien im Wesentlichen ohne Verschnitt genutzt werden können, können auch sehr hochwertige elastische Folienmaterialien eingesetzt werden. Insbesondere können auch mehrschichtige Elastomerfolien verwendet werden, die eine elastische Trägerschicht aus einem thermoplastischen Elastomer und beidseits der Trägerschicht angeordnete siegelfähige Deckschichten aufweisen. Für die elastische Trägerschicht kommen insbesondere Kautschuke auf Styrol-Butadien (SBR), Nitril-Butadien (NBR) und Isopren-Styrol (SIR) Basis in Betracht. Die Deckschichten können aus Polyolefin oder Polyolefin-Copolymeren bestehen. Durch die siegelfähigen Deckschichten lassen sich die Elastomerfolien gut verarbeiten und können durch Siegelnähte mit der Kunststofffolie an der Vorderseite der Folienhülle verbunden werden.

Im Folgenden wird die Erfindung anhand einer lediglich ein Ausführungsbeispiel darstellenden Zeichnung erläutert. Es zeigen schematisch
- Fig. 1: einen auf einen Kraftfahrzeugsitz aufgebrachten Schonbezug in einer perspektivischen Darstellung,
- Fig. 2: eine rückseitige Ansicht des flachgelegten Schonbezuges vor seiner Anwendung und
- Fig. 3: eine weitere Ausgestaltung der Erfindung, ebenfalls in einer rückseitigen Ansicht des flachgelegten Schonbezuges vor seiner Anwendung.

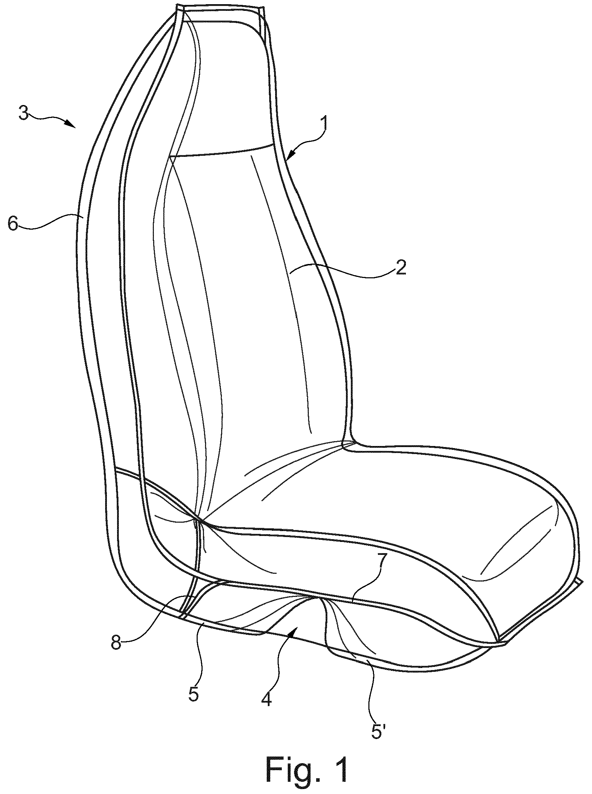

Die Fig. 1 zeigt einen Kraftfahrzeugsitz, über den ein Schonbezug gestülpt worden ist. Der Schonbezug besteht aus einer umfangseitig geschlossenen zweilagigen Folienhülle, die eine aus einer Kunststofffolie bestehende Vorderseite 2 sowie eine Rückseite 3 aufweist. An der Rückseite 3 enthält die Folienhülle 1 eine Öffnung 4, damit die Folienhülle 1 über den Fahrzeugsitz gestülpt und gezogen werden kann.

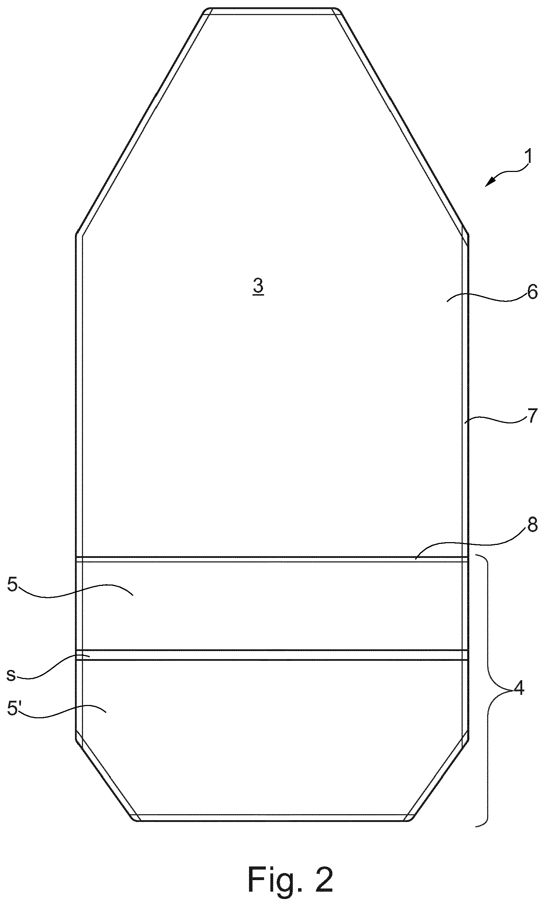

Gemäß der Darstellung in Fig. 2 weist die Rückseite 3 der Folienhülle 1 mindestens drei Folienbahnen 5, 5', 6 auf, die am Umfang der Folienhülle 1 durch eine Siegelnaht 7 mit der Kunststofffolie an der Vorderseite der Folienhülle verbunden sind. Zwei dieser drei Folienbahnen sind ohne Verbindung miteinander parallel nebeneinander angeordnet und bestehen aus Elastomerfolien. Eine dritte Folienbahn 6 an der Folienrückseite 3 besteht aus einer nichtelastischen Folie und ist mit der benachbarten Elastomerfolie 5 randseitig verbunden. Die Verbindung zwischen der nichtelastischen Folie 6 und der angrenzenden Elastomerfolie 5 erfolgt durch eine Siegelnaht 8, die sich über die gesamte Breite der Rückseite 3 der Folienhülle 1 erstreckt.

Da die Elastomerfolien 5, 5' nicht miteinander verbunden sind, geben die Elastomerfolien 5, 5' eine Öffnung frei, wenn den Folienhülle über den Fahrzeugsitz gestülpt wird. Die Elastomerfolien können unmittelbar aneinander angrenzen oder sich auch überlappen. Im Ausführungsbeispiel und gemäß einer bevorzugten Ausführung der Erfindung sind die Elastomerfolien 5, 5' an der Rückseite 3 der Folienhülle mit einem Abstand s nebeneinander angeordnet.

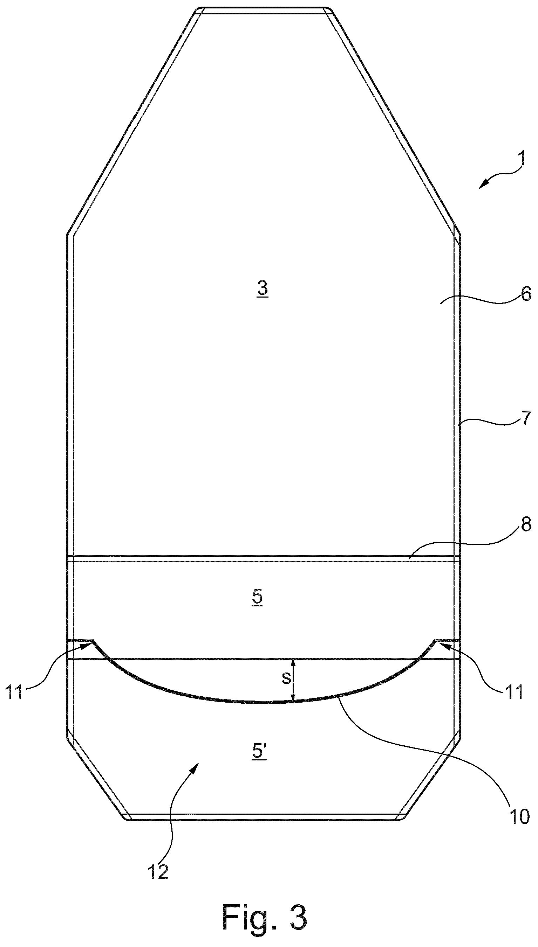

Im Ausführungsbeispiel der Fig. 3 weist zumindest einer der miteinander nicht verbundenen Ränder der Elastomerfolien 5, 5' eine derartige Kontur 10 auf, dass die Elastomerfolien sich in endseitigen Abschnitten 11 am Umfang der Folienhülle überlappen und in einem mittleren Bereich 12 zwischen den endseitigen Abschnitten mit einem Abstand s nebeneinander angeordnet sind. Die Kontur 10 hat einen im Wesentlichen bogenförmigen Verlauf. Der Darstellung in Fig. 3 ist auch zu entnehmen, dass die sich überlappenden endseitigen Abschnitte 11 der nebeneinander angeordneten Elastomerfolien 5, 5' am Umfang der Folienhülle 1 durch eine Siegelnaht 7 mit der die Vorderseite der Folienhülle bildenden Kunststofffolie verbunden sind. Durch die Überlappung der Endabschnitte 11 und die Einbindung der sich überlappenden Abschnitte 11 in die randseitige Siegelnaht 7 wird der Sitzbezug dort lokal verstärkt. Die Verstärkung verhindert, dass der Sitzbezug beim Überstülpen auf einen Fahrzeugsitz einreißt.

Die Kunststofffolie an der Vorderseite 2 der Folienhülle 1 und die nicht elastischen Folienbahn 6 an der Rückseite 3 der Folienhülle 1 können aus einer ein- oder mehrschichtigen Folie bestehen, die zumindest an der Innenseite der Folienhülle eine siegelfähige Schicht aus einem Polyolefin oder Polyolefin-Copolymer aufweist. Die Vorderseite 2 und die Rückseite 3 der Folienhülle 1 sind am Umfang der Folienhülle durch eine Siegelnaht 7 verbunden.

Die Elastomerfolien 5, 5' an der Rückseite 3 der Folienhülle 1 können aus einem Copolymer aus Ethylen-Vinylacetat oder Butylen-Vinylacetat bestehen. Alternativ können auch mehrschichtige Elastomerfolien verwendet werden, die eine elastische Trägerschicht aus einem thermoplastischen Elastomer und beidseits der Trägerschicht angeordnete siegelfähige Deckschichten aufweisen.

## Patentansprüche

1. Schonbezug für einen Fahrzeugsitz bestehend aus einer umfangseitig geschlossenen zweilagigen Folienhülle (1), die an ihrer Rückseite eine Öffnung (4) enthält, um die Folienhülle (1) über einen Fahrzeugsitz stülpen zu können, **dadurch gekennzeichnet, dass** die Rückseite (3) der Folienhülle (1) mindestens drei Folienbahnen (5, 5', 6) aufweist, die am Umfang der Folienhülle (1) durch eine Siegelnaht (7) mit einer die Vorderseite (2) der Folienhülle (1) bildenden Kunststofffolie verbunden sind, wobei zwei dieser drei Folienbahnen (5, 5') ohne Verbindung miteinander nebeneinander angeordnet sind und aus Elastomerfolien bestehen und wobei eine dritte Folienbahn (6) an der Folienrückseite (3) aus einer nichtelastischen Folie besteht und mit der benachbarten Elastomerfolie (5) randseitig verbunden ist.

2. Schonbezug nach Anspruch 1, **dadurch gekennzeichnet, dass** die Elastomerfolien (5, 5') an der Rückseite (3) der Folienhülle (1) mit einem Abstand (9) nebeneinander angeordnet sind.

3. Schonbezug nach Anspruch 1, **dadurch gekennzeichnet, dass** zumindest einer der miteinander nicht verbundenen Ränder der Elastomerfolien (5, 5') eine derartige Kontur (10) aufweist, dass die Elastomerfolien (5, 5') sich in endseitigen Abschnitten (11) am Umfang der Folienhülle (1) überlappen und in einem mittleren Bereich (12) zwischen den endseitigen Abschnitten (11) mit einem Abstand (s) nebeneinander angeordnet sind.

4. Schonbezug nach Anspruch 3, **dadurch gekennzeichnet, dass** zumindest einer der miteinander nicht verbundenen Ränder der Elastomerfolien (5,5') einen bogenförmigen Verlauf aufweist.

5. Schonbezug nach Anspruch 3 oder 4, **dadurch gekennzeichnet, dass** die sich überlappenden endseitigen Abschnitte der nebeneinander angeordneten Elastomerfolien (5, 5') am Umfang der Folienhülle durch eine Siegelnaht (7) mit der die Vorderseite (2) der Folienhülle (1) bildenden Kunststofffolie verbunden sind.

6. Schonbezug nach einem der Ansprüche 1 bis 5, **dadurch gekennzeichnet, dass** die Kunststofffolie an der Vorderseite (2) der Folienhülle (1) und die nichtelastische Folienbahn (6) an der Rückseite (13) der Folienhülle (1) aus einer ein- oder mehrschichtigen Folie bestehen, die zumindest an der Innenseite der Folienhülle eine siegelfähige Schicht aus einem Polyolefin oder Polyolefin-Copolymer aufweist.

7. Schonbezug nach einem der Ansprüche 1 bis 6, **dadurch gekennzeichnet, dass** die Elastomerfolien (5, 5') an der Rückseite (3) der Folienhülle (1) eine elastische Trägerschicht aus einem thermoplastischen Elastomer und beidseits der Trägerschicht angeordnete siegelfähige Deckschichten aufweisen.

## Claims

1. A protective cover for a vehicle seat, consisting of a two-ply film sheath (1), which is closed around the periphery and contains an opening (4) on the rear side thereof in order to be able to pull the film sheath (1) over a vehicle seat, **characterised in that** the rear side (3) of the film sheath (1) has at least three film webs (5, 5', 6), which are connected at the periphery of the film sheath (1) by a seal seam (7) to a plastic film that forms the front side (2) of the film sheath (1), wherein two of said three film webs (5, 5') are arranged adjacently to each other without being connected to each other and consist of elastomer films, and wherein a third film web (6) on the film rear side (3) consists of a non-elastic film and is connected at the edges to the adjacent elastomer film (5).

2. The protective cover according to Claim 1, **characterised in that** the elastomer films (5, 5') are arranged adjacently to each other with a spacing (9) on the rear side (3) of the film sheath (1).

3. The protective cover according to Claim 1, **characterised in that** at least one of the edges of the elastomer films (5, 5') that are not connected to each other has such a contour (10) that the elastomer films (5, 5') overlap each other in end sections (11) at the periphery of the foil sheath (1) and are arranged adjacently to each other with a spacing (s) in a central region (12) between the end sections (11).

4. The protective cover according to Claim 3, **characterised in that** at least one of the edges of the elastomer films (5, 5') that are not connected to each other has an arc-shaped profile.

5. The protective cover according to Claim 3 or 4, **characterised in that** the overlapping end sections of the elastomer films (5, 5') arranged adjacently to each other are connected at the periphery of the film sheath by a seal seam (7) to the plastic film forming the front side (2) of the film sheath (1).

6. The protective cover according to any one of Claims 1 to 5, **characterised in that** the plastic film on the front side (2) of the film sheath (1) and the non-elastic film web (6) on the rear side (13) of the film sheath (1) consist of a single- or multi-layered film, which has a sealable layer consisting of a polyolefin or polyolefin copolymer, at least on the inside of the film sheath.

7. The protective cover according to any one of Claims 1 to 6, **characterised in that** the elastomer films (5, 5') on the rear side (3) of the film sheath (1) have an elastic carrier layer consisting of a thermoplastic elastomer and sealable covering layers arranged on both sides of the carrier layer.

## Revendications

1. Housse protectrice pour un siège de véhicule, constituée d'une enveloppe en film (1) à deux couches, fermée sur la périphérie, à qui on confère sur sa face arrière une ouverture (4) permettant de housser l'enveloppe en film (1) sur un siège de véhicule, **caractérisée en ce que** la face arrière (3) de l'enveloppe en film (1) comporte au moins trois lés de film (5, 5', 6), qui sur la périphérie de l'enveloppe en film (1) sont reliés par une soudure (7) avec un film de matière plastique formant la face avant (2) de l'enveloppe en film (1), deux desdits trois lés de film (5, 5') étant placés côte à côte sans assemblage et étant constitués de films en élastomère et sur la face arrière (3) du film, un troisième lé de film (6) étant constitué d'un film non élastique et étant relié côté marginal avec le film en élastomère (5) voisin.

2. Housse protectrice selon la revendication 1, **caractérisée en ce que** les films en élastomère (5, 5') sont placés côte à côte avec un écart (9) sur la face arrière (3) de l'enveloppe en film (1).

3. Housse protectrice selon la revendication 1, **caractérisée en ce qu'**au moins l'un des bords non reliés les uns aux autres des films en élastomère (5, 5') comporte un contour (10) tel que sur des parties d'extrémité (11), les films en élastomère (5, 5') se chevauchent sur la périphérie de l'enveloppe en film (1) et dans une région centrale (12) entre les parties d'extrémité (11) sont placés côte à côte avec un écart (s).

4. Housse protectrice selon la revendication 3, **caractérisée en ce qu'**au moins l'un des bords non reliés les uns aux autres des films en élastomère (5, 5') présente un trajet curviligne.

5. Housse protectrice selon la revendication 3 ou la revendication 4, **caractérisée en ce que** sur la périphérie de l'enveloppe en film, les parties d'extrémité qui se chevauchent des films en élastomère (5, 5') placés côte à côte sont reliées par une soudure (7) avec le film en matière plastique formant la face avant (2) de l'enveloppe en film (1).

6. Housse protectrice selon l'une quelconque des revendications 1 à 5, **caractérisée en ce que** le film en matière plastique sur la face avant (2) de l'enveloppe en film (1) et le lé de film (6) non élastique sur la face arrière (13) de l'enveloppe en film (1) sont constitués d'un film monocouche ou multicouches qui au moins sur la face interne de l'enveloppe en film comporte une couche scellable en un polyoléfine ou en un copolymère de polyoléfine.

7. Housse protectrice selon l'une quelconque des revendications 1 à 6, **caractérisée en ce que** les films en élastomère (5, 5') sur la face arrière (3) de l'enveloppe en film (1) comportent une couche de support élastique en un élastomère thermoplastique et des couches de recouvrement scellables placées de part et d'autre de la couche de support.
